# EUROPEAN PATENT SPECIFICATION

(11) **EP 4 282 730 B1**
(45) Date of publication and mention of the grant of the patent: **13.08.2025**
(21) Application number: 21863053.1
(22) Date of filing: 22.01.2021
(51) Int. Cl.: B61D 27/00

(54) **RAILROAD CAR AIR CONDITIONER**
KLIMAANLAGE FÜR EISENBAHNWAGEN
CLIMATISEUR DE WAGON DE CHEMIN DE FER

(43) Date of publication of application: 29.11.2023
(73) Proprietor: Hitachi, Ltd., Tokyo 100-8280 (JP)
(72) Inventor: MAITA, Hiroshi, Tokyo 100-8280 (JP); TOYODA, Hiroyuki, Tokyo 100-8280 (JP); TAGUCHI, Shoichi, Tokyo 100-8280 (JP); KAWASAKI, Akinori, Tokyo 100-8280 (JP); TAGUCHI, Tomoaki, Tokyo 100-8280 (JP); AKIMARU, Daisuke, Tokyo 100-8280 (JP)
(74) Representative: MERH-IP Matias Erny Reichl Hoffmann Patentanwälte PartG mbB
(86) International application number: PCT/JP2021/002343
(87) International publication number: WO 2022/157951

(56) References cited:
- EP-A1- 3 369 595
- EP-A1- 3 369 595
- CN-A- 101 987 568
- JP-A- H11 192 942
- JP-A- H11 192 942
- JP-U- S61 169 814
- US-A1- 2017 028 820

## Description

### Technical Field

The present invention relates to an air conditioning system for a railway vehicle.

### Background Art

Although most of the bacteria and viruses as well as dust floating in air inside a railway vehicle are forcibly discharged to the outside of the vehicle by ventilation equipment and are also naturally discharged from openings at doors and so forth, some of them adhere to wall surfaces, floor surfaces, and the inside of the air conditioning system. Among them, the wall surfaces and the floor surfaces are kept hygienic by periodical disinfection works.

However, a cleaning work and a disinfection work for the inside of the air conditioning system are performed only in a case in which maintenance of the air conditioning system is performed. In recent years, with the growing interest in new infectious diseases and so forth that occur frequently, especially a railway vehicle that serves as public transportation means is required to further reduce bacteria, viruses, and so forth remaining in the vehicle than before.

To meet such a request from the society as described, an air conditioning system for a railway vehicle which is disclosed in Patent Document 1 is available, for example. In the example in Patent Document 1, a technology of sterilizing bacteria floating in the air by using a photocatalyst is disclosed. However, the technology does not necessarily demonstrate a sufficient effect for disinfection of the inside of the air conditioning system to which bacteria, viruses, and so forth have already adhered.

### Prior Art Document

### Patent Document

Patent Document 1: JP-1999-192942-A

### Summary of the Invention

### Problem to be Solved by the Invention

It is an object of the present invention to provide an air conditioning system for a railway vehicle that allows a surface of a heat exchanger in the air conditioning system to which not only dust but also bacteria, viruses, and so forth are likely to adhere, to be kept hygienic by employing a safe method and that is thus superior in hygiene.

### Means for Solving the Problem

In order to achieve the object, according to the present invention, there is provided an air conditioning system for a railway vehicle that is of a roof installation type, the air conditioning system including a heat exchanger through which at least air inside the railway vehicle passes and an ultraviolet-ray irradiation device, the heat exchanger and the ultraviolet-ray irradiation device being arranged between an upper cover curved in an upwardly protruding shape and a bottom plate. The heat exchanger has an air suction surface arranged so as to be irradiated with ultraviolet rays generated by the ultraviolet-ray irradiation device. A member that does not transmit the ultraviolet rays is arranged on a straight line interconnecting the ultraviolet-ray irradiation device and an interior space of the railway vehicle.

### Advantages of the Invention

According to the present invention, it is possible to provide an air conditioning system for a railway vehicle that allows a surface of a heat exchanger in the air conditioning system to which not only dust but also bacteria, viruses, and so forth are likely to adhere, to be kept hygienic by employing a safe method and that is thus superior in hygiene.

### Brief Description of the Drawings

FIG. 1 is a cross sectional view depicting an internal configuration of an air conditioning system for a railway vehicle according to a first embodiment of the present invention.
FIG. 2 is a view depicting a component of a fin tube heat exchanger which is used in the air conditioning system for a railway vehicle depicted in FIG. 1.
FIG. 3 is a cross sectional view depicting an internal configuration of an air conditioning system for a railway vehicle according to a second embodiment of the present invention.

### Modes for Carrying Out the Invention

In the following, embodiments of the present invention are described with reference to the accompanying drawings.

### [First embodiment]

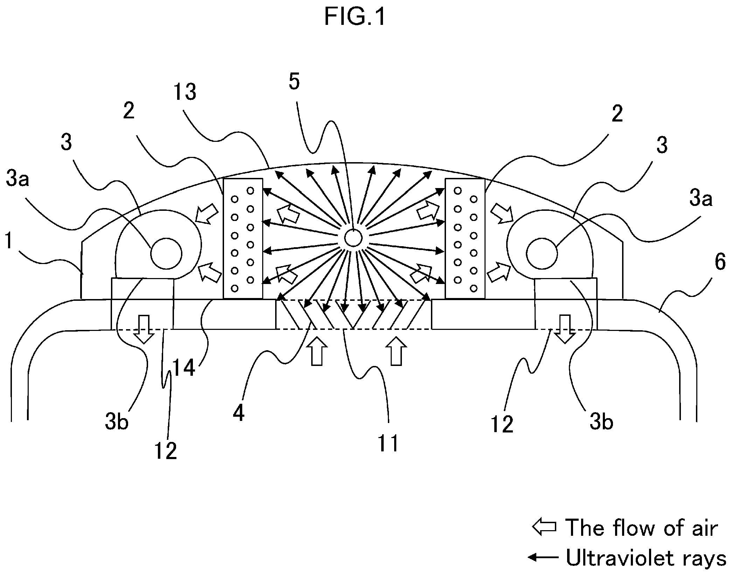

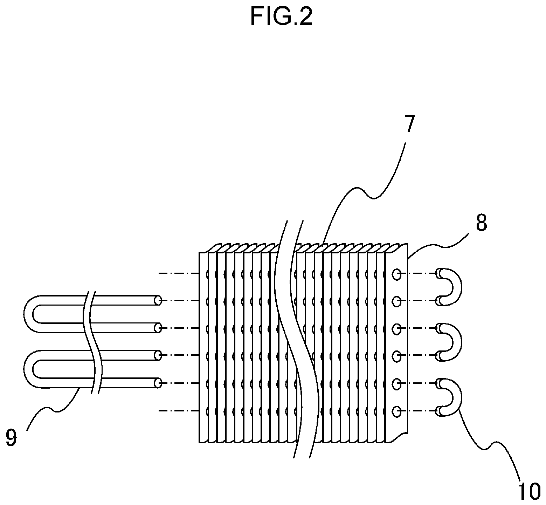

A first embodiment of the present invention is described with reference to FIGS. 1 and 2. FIG. 1 is a cross sectional view depicting an internal configuration of an air conditioning system 1 for a railway vehicle (hereinafter, also simply referred to as an "air conditioning system") according to the first embodiment of the present invention. In particular, FIG. 1 is a cross sectional view of a principal part of the air conditioning system 1 which is taken along a plane perpendicular to a longitudinal direction of the body of the vehicle, while FIG. 2 is a view depicting a component 7 of a fin tube heat exchanger (hereinafter, also simply referred to as a "heat exchanger") 2 which is used in the air conditioning system 1 for a railway vehicle depicted in FIG. 1. As depicted in FIG. 1, the air conditioning system 1 is mounted on a roof of a vehicle body 6. The air conditioning system 1 includes principal equipment accommodated in a space surrounded by an upper cover 13 and a substantially flat plate-shaped bottom plate 14 of the air conditioning system 1.

A pair of heat exchangers 2 each having an outer profile of a thick plate are arranged in parallel to each other at a predetermined interval such that they are facing each other, and an ultraviolet-ray irradiation device 5 is disposed in the center between the heat exchangers 2. The ultraviolet-ray irradiation device 5 is disposed on the windward side of the heat exchangers 2 so as to face the heat exchangers 2. When the air conditioning system 1 operates, airflow is generated by air blowers 3, and air flowing in the vehicle is then introduced into the air conditioning system 1 through an air suction port 11 in which a suction grill 4 is disposed. Then, the air is cooled or heated by the heat exchangers 2 and returns to the inside of the vehicle from air blowout ports 12 through the air blowers 3.

In the first embodiment, an ultraviolet lamp of the straight tube type is used in the ultraviolet-ray irradiation device 5. However, an ultraviolet-ray source of the LED type may alternatively be used, for example. As depicted in FIG. 2, each of the heat exchangers 2 is of the type called a fin tube type. The component 7 of the heat exchanger 2 has such a structure that heat transfer tubes 9 having a hairpin shape extend through a number of flat plate-shaped fins 8. Adjacent ones of the heat transfer tubes 9 are connected to each other at end portions thereof by a joint such as a return pipe 10 to form a refrigerant (heat medium) flow path.

The heat exchangers 2 in the first embodiment are disposed such that a longitudinal direction of the heat transfer tubes 9 coincides with the longitudinal direction of the vehicle body. It is to be noted that, since the heat exchanger 2 has such a structure as to send the air in a direction perpendicular to the heat transfer tubes 9, the heat exchanger 2 sends the air in a direction perpendicular to the longitudinal direction of the vehicle body. Further, a centrifugal fan is used in the air blower 3. Generally, a centrifugal fan or a sirocco fan is configured to suck the air in a direction of an axis of rotation thereof and blow out the air in a direction perpendicular to the axis of the rotation. Since a ventilation path in the inside of the air blower 3 is bent at a substantially right angle, the light passing property from a suction port to a blowout port is extremely low.

Besides, the air blower 3 in the first embodiment depicted in FIG. 1 is configured such that the suction port thereof is open in an air suction direction which is coincident with the longitudinal direction of the vehicle body. The degree of ultraviolet rays that enter the suction port from a direction perpendicular to the suction direction is extremely low. The suction grill 4 has a plurality of blades of a substantially flat plate shape. The blades are arrayed such that longitudinal directions thereof are substantially the same as one another.

Further, the angle and the length of the blades in the flow direction are set such that surfaces of the blades intersect with a straight line interconnecting the ultraviolet irradiation device and the inside of the vehicle. Moreover, a fluorescent substance is applied to the surfaces of the blades.

Suction surfaces of the heat exchangers 2 to which not only dust but also bacteria, viruses, and so forth are likely to adhere are irradiated with ultraviolet rays which are emitted from the ultraviolet-ray irradiation device 5, bringing about an effect of embrittling the dust and of disinfecting the bacteria, viruses, and so forth. The upper cover 1 and the suction grill 4 of the air conditioning system 1 are irradiated with ultraviolet rays which are emitted from the ultraviolet-ray irradiation device 5 in directions other than the directions toward the heat exchangers 2.

It is commonly known that the ultraviolet rays have not only a beneficial bactericidal action but also an adverse effect on the human body, especially, on the eyes and the skin. In this regard, the suction grill 4 has the blades whose angle and length in the flow direction are arranged such that the surfaces of the blades intersect with the straight line interconnecting the ultraviolet irradiation device and the inside of the vehicle, as described hereinabove. Therefore, the ultraviolet rays emitted from the ultraviolet-ray irradiation device 5 are suppressed from leaking directly into the vehicle and thus do not adversely affect passengers in the vehicle.

Further, the ultraviolet rays emitted to the surfaces of the blades cause the fluorescent substance applied to the surfaces of the blades to emit light. A person in the vehicle who sees the emitted light can confirm that the ultraviolet irradiation device is operating. Such a function that allows operation confirmation through the light emission as described above brings about an effect of making passengers feel safe and making cleanliness of the inside of the vehicle appeal to the passengers. As described hereinabove, the heat exchanger 2 is of the fin tube type including a number of fins 8 on a flat plate and has a high light passing property in a direction in which the air permeability is preferable.

In a case where ultraviolet rays are emitted to the suction surfaces of the heat exchangers 2 having such a structure as described above, there is a possibility that some of the ultraviolet rays may leak to the downwind side of the heat exchangers 2 through gaps between the fins. However, in the first embodiment, since the air suction direction of the air blowers 3 located on the downwind side of the heat exchangers 2 is the longitudinal direction of the vehicle, even if ultraviolet rays leak through the gaps between the fins 8 in a direction perpendicular to the longitudinal direction of the vehicle, that is, in a ventilation direction, the ultraviolet rays are prevented from passing through the air blowers 3 and leaking into the vehicle.

In this manner, according to the present configuration, the air conditioning system 1 can demonstrate an effect of embrittling dust and disinfecting bacteria, viruses, and so forth, by emitting ultraviolet rays to the surfaces of the heat exchangers 2 with certainty, and can also prevent leakage of the ultraviolet rays into the vehicle. In other words, it is possible to provide the air conditioning system for a railway vehicle that allows the surfaces of the heat exchangers 2 in the air conditioning system to be kept hygienic by employing a safe method and that is thus superior in hygiene.

### [Second embodiment]

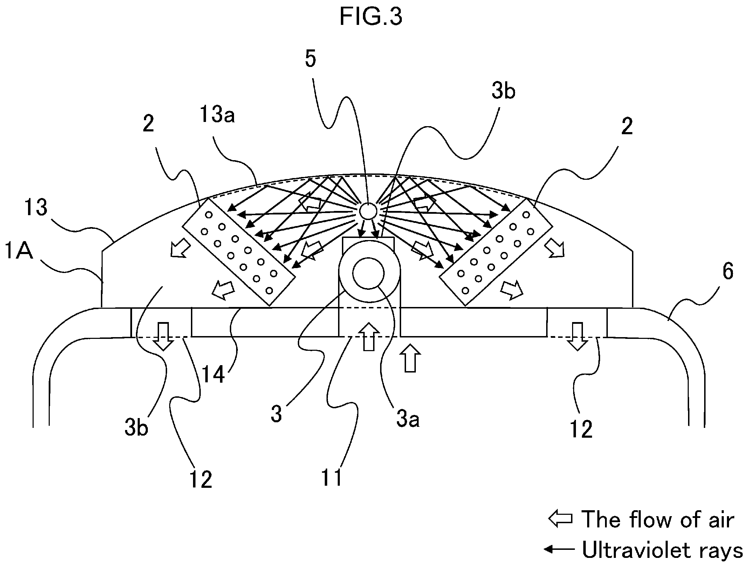

Now, a second embodiment of the present invention is described with reference to FIG. 3. FIG. 3 is a cross sectional view depicting an internal configuration of an air conditioning system 1A for a railway vehicle according to the second embodiment of the present invention and, in particular, is a cross sectional view of a principal part of the air conditioning system 1 which is taken along a plane perpendicular to the longitudinal direction of the body of the vehicle. The air conditioning system 1 is mounted on the roof of the vehicle body 6 as depicted in FIG. 2. The air conditioning system 1 includes principal equipment accommodated in a space surrounded by the upper cover 13 and the substantially flat plate-shaped bottom plate 14 of the air conditioning system 1.

When the air conditioning system 1A operates, airflow is generated by the air blower 3, and air flowing in the vehicle is then introduced into the air conditioning system 1 through the air suction port 11. Then, the air passes through the air blower 3, is cooled or heated by the heat exchangers 2, and then return to the inside of the vehicle from the air blowout ports 12. The ultraviolet-ray irradiation device 5 is disposed above the air blower 3 so as to face the heat exchangers 2 and the upper cover 13.

In the air conditioning system 1A of the second embodiment, an ultraviolet lamp of the straight tube type is used in the ultraviolet-ray irradiation device 5. However, an ultraviolet-ray source of the LED type may alternatively be used, for example. It is to be noted that the second embodiment is similar to the first embodiment in that the heat exchangers 2 are of the fin tube type and the air blower 3 includes a centrifugal fan or a sirocco fan.

It is to be noted that a portion of an inner surface of the upper cover of the air conditioning system is processed so as to reflect ultraviolet rays and forms a reflection surface 13a of the inner surface of the upper cover. Specifically, the reflection surface 13a of the inner surface of the upper cover is formed by attaching, to the inner surface of the upper cover, a sheet which reflects ultraviolet rays.

The suction surfaces of the heat exchangers 2 to which not only dust but also bacteria, viruses, and so forth are likely to adhere are directly irradiated with ultraviolet rays emitted from the ultraviolet-ray irradiation device 5 and are also indirectly irradiated with ultraviolet rays reflected by the reflection surface 13a of the inner surface of the upper cover. In other words, the suction surfaces of the heat exchangers 2 can be irradiated more effectively than the case where they are irradiated with only direct light.

Consequently, according to the air conditioning system 1A of the second embodiment, even if the number of the ultraviolet-ray irradiation devices 5 or the irradiation intensity thereof is reduced, a disinfection effect which is equivalent to that with the air conditioning system 1 of the first embodiment can be produced. Further, although ultraviolet rays emitted downwardly from the ultraviolet-ray irradiation device 5 partly enter the air blower 3 through the blowout port 3b thereof, the ultraviolet rays do not leak into the vehicle since the suction direction and blowout direction of the air blower 3 are perpendicular to each other.

In this manner, with the configuration of the air conditioning system 1A according to the second embodiment, since ultraviolet rays can be emitted to the surfaces of the heat exchangers 2 with a higher degree of certainty, the air conditioning system 1A can demonstrate an effect of embrittling dust and disinfecting bacteria, viruses, and so forth, and can also prevent leakage of the ultraviolet rays into the vehicle. In other words, it is possible to provide the air conditioning system 1A for a railway vehicle that allows the surfaces of the heat exchangers 2 in the air conditioning system to be kept hygienic by employing a safe method and that is thus superior in hygiene.

The air conditioning system 1 for a railway vehicle (hereinafter referred to as the "present system 1") according to the embodiment of the present invention can be summarized as follows.
[1] The present system 1 is an air conditioning system 1 for a railway vehicle that is of a roof installation type, the air conditioning system 1 including a heat exchanger 2 through which at least air inside the railway vehicle passes, and an ultraviolet-ray irradiation device 5, the heat exchanger 2 and the ultraviolet-ray irradiation device 5 being arranged between an upper cover 13 curved in an upwardly protruding shape and a bottom plate 14. The heat exchanger 2 has an appearance of a thick plate or a flattened box, and has a first surface and a second surface which are principal surfaces having the greatest area and which are facing each other. The heat exchanger 2 performs a heat exchange when the air is sent from the first surface to the second surface, adjusting room temperature.

Each of the first and second surfaces that form the principal surfaces is herein referred to as a "surface" in order to specify any portion of the heat exchanger 2 on the basis of an appearance, and even if it macroscopically is a "surface," it microscopically has a form of a lattice in which a large number of gaps are lined up. Since the first surface and the second surface have a low air resistance in a direction perpendicular thereto and a favorable air passing property, the first surface of such a latticed pattern as described above forms an air suction surface, and the second surface similar to the first surface forms an air delivery surface.

The air suction surface of the heat exchanger 2 is arranged so as to be irradiated with ultraviolet rays generated by the ultraviolet-ray irradiation device 5. Therefore, the ultraviolet rays enter a deep portion of the air suction surface, which is open in the latticed pattern and has the gaps formed therein, to a certain extent along surfaces of a number of fins 8 arranged perpendicularly to the air suction surface. Accordingly, by the ultraviolet rays emitted from the ultraviolet-ray irradiation device, dust adhering to the surface of the heat exchanger 2 and the surfaces of the fins 8 in the air conditioning system is embrittled, and an effect of disinfecting bacteria, viruses, and so forth is demonstrated.

A member that does not transmit the ultraviolet rays is arranged on a straight line interconnecting the ultraviolet-ray irradiation device 5 and an interior space of the vehicle. Accordingly, the safety is ensured for passengers who are in the interior space of the vehicle in which irradiation of the ultraviolet rays by the ultraviolet-ray irradiation device 5 is shielded. In other words, the present system 1 allows the surface of the heat exchanger 2 in the air conditioning system, to which not only dust but also bacteria, viruses, and so forth are like to adhere, to be kept hygienic by employing a safe method and is thus superior in hygiene.

[2] In the present system 1 according to [1] above, as the member that does not transmit the ultraviolet rays, a grill 4 is arranged at a suction port 11 that sucks the air inside the railway vehicle, the grill 4 having a plurality of blades arrayed in substantially the same direction. The size and angle of each of the blades of the grill 4 are set such that a surface of the blade intersects with a straight line interconnecting the ultraviolet-ray irradiation device 5 and the suction port, to thereby reduce the light passing property in a direction of the straight line. Accordingly, the ultraviolet rays can be prevented from leaking directly into the vehicle and from adversely affecting the passengers in the vehicle.

[3] In the present system 1 according to [1] above, the heat exchanger 2 is of a fin tube type, and an air blower 3 of a sirocco type or a centrifugal type is disposed on a downwind side of the heat exchanger 2. The centrifugal fan or the sirocco fan has an axis of rotation coincident with the longitudinal direction of the vehicle body, that is, with the advancing direction of the vehicle body, and the air is sucked in a direction of the axis of the rotation while the air is blown out in a direction perpendicular to the direction of the axis of the rotation.

The suction direction is substantially the same as a tube axis direction of the heat transfer tube 9 of the heat exchanger 2. Specifically, since the suction direction and the blowout direction of the air blower 3 are perpendicular to each other, although ultraviolet rays emitted downwardly from the ultraviolet-ray irradiation device 5 partly enter the air blower 3 through the blowout port 3b thereof, the ultraviolet rays cannot advance straight in the bent internal ventilation path. Consequently, the ultraviolet rays do not leak into the vehicle.

[4] In the present system 1 according to [1] above, a fluorescent material is applied to a surface (blade surface) of the blade of the grill 4. Since the ultraviolet rays emitted to the blade surface causes the fluorescent material applied to the blade surface to emit light, it is possible to confirm operation of the ultraviolet-ray irradiation device from the inside of the vehicle. Consequently, an effect of making passengers feel safe and making cleanliness of the inside of the vehicle appeal to the passengers is produced.

[5] In the present system according to [1] above, an inner surface of the upper cover 13 has at least a portion that faces a windward side of the heat exchanger 2 and that reflects the ultraviolet rays. For example, the suction surface of the heat exchanger 2 is directly irradiated with ultraviolet rays emitted from the ultraviolet-ray irradiation device 5 and is also indirectly irradiated with ultraviolet rays reflected by the reflection surface 13a of the inner surface of the upper cover. As a result, since the suction surface of the heat exchanger 2 can be irradiated more effectively than the case where it is irradiated with only direct light. Therefore, the number of the ultraviolet-ray irradiation devices 5 or the irradiation intensity thereof can be reduced and saved to achieve an equivalent disinfection effect.

### Description of Reference Characters

1, 1A: Air conditioning system for a railway vehicle
2: Heat exchanger
3: Air blower
4: (Suction) grill
5: Ultraviolet-ray irradiation device
6: Vehicle body
7: Component of the heat exchanger 2
8: Fin
9: Transfer tube
10: Return pipe
11: Air suction port (in a vehicle)
12: Air blowout port
13: Upper cover
14: Bottom plate

## Claims

1. An air conditioning system (1) for a railway vehicle that is of a roof installation type, the air conditioning system comprising:
a heat exchanger (2) through which at least air inside the railway vehicle passes;
**characterized by**
an ultraviolet-ray irradiation device (5),
the heat exchanger (2) and the ultraviolet-ray irradiation device (5) being arranged between an upper cover curved in an upwardly protruding shape and a bottom plate, wherein
the heat exchanger has an air suction surface arranged so as to be irradiated with ultraviolet rays generated by the ultraviolet-ray irradiation device (5), and
a member that does not transmit the ultraviolet rays is arranged on a straight line interconnecting the ultraviolet-ray irradiation device and an interior space of the railway vehicle.

2. The air conditioning system (1) for a railway vehicle according to claim 1, wherein,
as the member that does not transmit the ultraviolet rays,
a grill (4) is arranged at a suction port (11) that sucks the air inside the railway vehicle, the grill (4) having a plurality of blades arrayed in substantially the same direction, and
a size and an angle of each of the blades of the grill (4) are set such that a straight line interconnecting the ultraviolet-ray irradiation device (5) and the suction port (11) intersects with a surface of the blade without fail.

3. The air conditioning system (1) for a railway vehicle according to claim 1, wherein
the heat exchanger is of a fin tube type, and an air blower (3) of a sirocco type or a centrifugal type is disposed on a downwind side of the heat exchanger (2), and
a suction direction of the air blower is substantially the same as a tube axis direction of the heat exchanger (2).

4. The air conditioning system (1) for a railway vehicle according to claim 2, wherein
a fluorescent material is applied to the surface of the blade of the grill (4).

5. The air conditioning system (1) for a railway vehicle according to claim 1, wherein
an inner surface of the upper cover has at least a portion that faces a windward side of the heat exchanger (2) and that reflects the ultraviolet rays.

## Patentansprüche

1. Klimaanlage (1) für ein Schienenfahrzeug, das vom Dachmontagetyp ist, wobei die Klimaanlage umfasst:
einen Wärmetauscher (2), durch den zumindest Luft im Inneren des Schienenfahrzeugs strömt;
**gekennzeichnet durch**
eine Ultraviolettstrahl-Bestrahlungsvorrichtung (5),
wobei der Wärmetauscher (2) und die Ultraviolettstrahl-Bestrahlungsvorrichtung (5) zwischen einer oberen Abdeckung, die in einer nach oben vorstehenden Form gekrümmt ist, und einer Bodenplatte angeordnet sind, wobei
der Wärmetauscher eine Luftansaugfläche aufweist, die so angeordnet ist, dass sie mit Ultraviolettstrahlen bestrahlt wird, die von der Ultraviolettstrahl-Bestrahlungsvorrichtung (5) erzeugt werden, und
ein Element, das die Ultraviolettstrahlen nicht durchlässt, auf einer geraden Linie angeordnet ist, die die Ultraviolettstrahl-Bestrahlungsvorrichtung und einen Innenraum des Schienenfahrzeugs verbindet.

2. Klimaanlage (1) für ein Schienenfahrzeug nach Anspruch 1, wobei
als das Element, das die Ultraviolettstrahlen nicht durchlässt,
ein Gitter (4) an einer Ansaugöffnung (11) angeordnet ist, die die Luft im Inneren des Schienenfahrzeugs ansaugt, wobei das Gitter (4) eine Vielzahl von Lamellen aufweist, die im Wesentlichen in der gleichen Richtung angeordnet sind, und
eine Größe und ein Winkel jeder der Lamellen des Gitters (4) so eingestellt sind, dass eine gerade Linie, die die Ultraviolettstrahl-Bestrahlungsvorrichtung (5) und die Ansaugöffnung (11) verbindet, eine Oberfläche der Lamelle ohne Ausfall schneidet.

3. Klimaanlage (1) für ein Schienenfahrzeug nach Anspruch 1, wobei
der Wärmetauscher vom Rippenrohrtyp ist und ein Luftgebläse (3) vom Sirocco-Typ oder Zentrifugaltyp auf einer leewärtigen Seite des Wärmetauschers (2) angeordnet ist, und
eine Ansaugrichtung des Luftgebläses im Wesentlichen die gleiche wie eine Rohrachsenrichtung des Wärmetauschers (2) ist.

4. Klimaanlage (1) für ein Schienenfahrzeug nach Anspruch 2, wobei
ein fluoreszierendes Material auf die Oberfläche der Lamelle des Gitters (4) aufgebracht ist.

5. Klimaanlage (1) für ein Schienenfahrzeug nach Anspruch 1, wobei
eine Innenfläche der oberen Abdeckung zumindest einen Abschnitt aufweist, der einer Luvseite des Wärmetauschers (2) zugewandt ist und der die Ultraviolettstrahlen reflektiert.

## Revendications

1. Système de climatisation (1) pour un véhicule ferroviaire qui est du type à installation de toit, le système de climatisation comprenant :
un échangeur de chaleur (2) à travers lequel au moins de l'air à l'intérieur du véhicule ferroviaire passe ;
**caractérisé par**
un dispositif d'irradiation par rayons ultraviolets (5),
l'échangeur de chaleur (2) et le dispositif d'irradiation par rayons ultraviolets (5) étant agencés entre un couvercle supérieur incurvé dans une forme faisant saillie vers le haut et une plaque inférieure, dans lequel
l'échangeur de chaleur a une surface d'aspiration d'air agencée de manière à être irradiée avec des rayons ultraviolets générés par le dispositif d'irradiation par rayons ultraviolets (5), et
un élément qui ne transmet pas les rayons ultraviolets est agencé sur une ligne droite interconnectant le dispositif d'irradiation par rayons ultraviolets et un espace intérieur du véhicule ferroviaire.

2. Système de climatisation (1) pour un véhicule ferroviaire selon la revendication 1, dans lequel,
en tant qu'élément qui ne transmet pas les rayons ultraviolets,
une grille (4) est agencée au niveau d'un orifice d'aspiration (11) qui aspire l'air à l'intérieur du véhicule ferroviaire, la grille (4) ayant une pluralité de lames agencées sensiblement dans la même direction, et
une taille et un angle de chacune des lames de la grille (4) sont réglés de sorte qu'une ligne droite interconnectant le dispositif d'irradiation par rayons ultraviolets (5) et l'orifice d'aspiration (11) coupe une surface de la lame sans défaillance.

3. Système de climatisation (1) pour un véhicule ferroviaire selon la revendication 1, dans lequel
l'échangeur de chaleur est du type à tube à ailettes, et une soufflante d'air (3) du type sirocco ou du type centrifuge est disposée sur un côté sous le vent de l'échangeur de chaleur (2), et
une direction d'aspiration de la soufflante d'air est sensiblement la même qu'une direction d'axe de tube de l'échangeur de chaleur (2).

4. Système de climatisation (1) pour un véhicule ferroviaire selon la revendication 2, dans lequel
un matériau fluorescent est appliqué sur la surface de la lame de la grille (4).

5. Système de climatisation (1) pour un véhicule ferroviaire selon la revendication 1, dans lequel
une surface interne du couvercle supérieur a au moins une partie qui fait face à un côté au vent de l'échangeur de chaleur (2) et qui réfléchit les rayons ultraviolets.
